# EUROPÄISCHE PATENTSCHRIFT

(11) **EP 1 223 097 B1**
(45) Veröffentlichungstag und Bekanntmachung des Hinweises auf die Patenterteilung: **18.08.2004**
(21) Anmeldenummer: 01128694.5
(22) Anmeldetag: 01.12.2001
(51) Int. Cl.: B62D 21/15, B62D 21/10, B62D 29/00

(54) **Tragstruktur für einen Kraftwagen mit daran befestigtem Ausstattungsteil**
Support structure for motor vehicle with attached equipment part
Structure de support de véhicule avec une pièce d'équipement attachée

(30) Priorität: 13.01.2001 DE 10101339
(43) Veröffentlichungstag der Anmeldung: 17.07.2002
(73) Patentinhaber: DaimlerChrysler AG, 70567 Stuttgart (DE)
(72) Erfinder: Baumann, Karl-Heinz, 71149 Bondorf (DE); Bruhnke, Ulrich, 71139 Ehningen (DE); Kohler, Jürgen, 71134 Aidlingen (DE); Krempels, Uwe, 71032 Böblingen (DE); Schinke, Hansjörg, 71088 Holzgerlingen (DE)

(56) Entgegenhaltungen:
- EP-A- 0 523 831
- EP-A- 1 044 863
- DE-A- 10 018 900
- DE-A- 19 524 165
- US-A- 4 353 430

## Beschreibung

Die Erfindung betrifft eine Tragstruktur für einen Kraftwagen nach dem Oberbegriff des Patentanspruchs 1.

Eine solche, der EP 0 523 831 A1 als bekannt zu entnehmende Tragstruktur ist überwiegend aus mehrwandigen Leichtbauplatten mit planparallelen Breitseiten zusammengesetzt, wobei aus einer den Fahrgastraum nach vorne hin begrenzenden Stirnwand Öffnungen zur Befestigung eines Ausstattungsteils, beispielsweise eines Lenkungsbauteils oder eines Pedalwerkbauteils ausgespart sind.

Weiter ist aus der US-A-4 353 430 die Anordnung eines solchen Ausstattungsteiles unter Überdeckung einer Öffnung in einer Stirnwand bekannt, welche den Fahrgastraum des Kraftwagens begrenzt. Dabei ist zur Einsetzbegrenzung am Ausstattungsteil eine Stützmittelanordnung in Form eines umlaufenden Randes vorgesehen, welches mit einem Öffnungsrand der Stirnwand zusammenwirkt.

Der DE 195 24 165 A1 ist ebenfalls die Anordnung eines als Pedalwerkbauteil gestalteten Ausstattungsteiles unter Überdeckung einer Öffnung in einer den Fahrgastraum des Kraftwagens begrenzenden Stirnwand bekannt.

Schließlich ist aus der DE 199 17 177 A1 eine Tragstruktur für einen Kraftwagen als bekannt zu entnehmen, die überwiegend aus mehrwandigen, relativ dicken Leichtbauplatten mit planparallelen Breitseiten zusammengesetzt ist. Dabei sind Ausstattungsteile wie Sitze, Aggregate oder dgl. an den Breitseiten der Leichtbauplatten der Tragstruktur befestigt.

Aufgabe der Erfindung ist die Schaffung einer Tragstruktur der eingangs genannten Art, die eine platzsparende Anordnung der Ausstattungsteile in einem Bereich der Tragstruktur ermöglicht, der unabhängig vom Fahrzeugkonzept bei allen Tragstrukturen vorhanden ist.

Die erfindungsgemäße Lösung dieser Aufgabe ergibt sich aus den Merkmalen des Hauptanspruchs.
Vorteilhafte Ausgestaltungen der Erfindung sind den übrigen Ansprüchen zu entnehmen.

Erfindungsgemäß kann auf platzsparende Weise der durch die Öffnung in der zumeist relativ dicken Leichtbauplatte geschaffene Raum für das Ausstattungsteil verwendet werden, ohne dass damit eine nennenswerten Schwächung der Leichtbauplatte verbunden wäre. Im Gegensatz zur konventionellen Anbindung von Ausstattungsteilen an einer Stahlblechkarosserie sind demnach keine zusätzlichen Versteifungen nötig; vielmehr können die besonderen Eigenschaften von Karosserien, die im Anordnungsbereich des Ausstattungsteils aus eigensteifen, doppelwandigen Leichtbauplatten bestehen, gezielt genutzt werden.

Erfindungsgemäß ist die Anordnung des Ausstattungsteils in einer den Fahrgastraum des Kraftwagens begrenzenden Leichtbauplatte, da dort der Bauraum für Ausstattungsteile erfahrungsgemäß sehr knapp ist. Zudem ist die erfindungsgemäße Anordnung des Ausstattungsteiles in die Leichtbauplatte eines Stützkastens am vorderen Ende der Tragstruktur, da dort viele Aggregate wie Lenkungsbauteile, Pedalwerkbauteile, elektrische Gehäuse oder dgl. auf äußerst begrenztem Raum angeordnet werden müssen.

Zur Einsetzbegrenzung ist am Ausstattungsteil eine Stützmittelanordnung z.B. bestehend aus Laschen oder Flanschen vorgesehen, welche ein einfaches Montieren und maßgenaues Einsetzen des Ausstattungsteils ermöglichen. Die direkte flächige Anbindung des Ausstattungsteils an der doppelwandigen Leichtbauplatte ermöglicht zudem eine einfache, sehr belastbare und steife Verbindung.

Als besonders raumsparend hat sich die Anordnung des Ausstattungsteiles an einer Leichtbauplatte gezeigt, welche durch ein Außenbeplankungsteil des Kraftwagens verkleidet ist. Hierdurch kann der Zwischenraum zwischen Leichtbauplatte und Beplankungsteil optimal für das Ausstattungsteil genutzt werden.

Durch einen umlaufenden Anlageflansch wird eine besonders gute flächige Anbindung des Ausstattungsteils an der Leichtbauplatte ermöglicht, wobei die Leichtbauplatte im Bereich der Öffnung auf einfache Weise durch den Anlageflansch versteift werden kann. Eine zusätzliche Versteifung der Leichtbauplatte und eine optimale Raumausnutzung der Öffnung ergibt sich weiter, wenn der lichte Querschnitt der Öffnung auf den zugeordneten Durchtrittsquerschnitt des Ausstattungsteils abgestimmt ist.

Besonders einfach montierbar ist ein Ausstattungsteil, welches mittels eines auf dessen durch die Öffnung ragenden Endbereich aufgeschobenen Ringflansch in seiner Auflagestellung an der Leichtbauplatte niedergehalten ist.

Weitere Vorteile, Merkmale und Einzelheiten der Erfindung ergeben sich aus der nachfolgenden Beschreibung bevorzugter Ausführungsbeispiele sowie anhand der Zeichnungen; diese zeigen in
- Fig.1: eine Perspektivansicht von schräg vorne oben auf eine überwiegend aus planen Leichtbauplatten zusammengesetzte Tragstruktur eines Kraftwagens;
- Fig.2: eine Perspektivansicht von schräg vorne oben auf die teilweise mit Verkleidungsteilen beplankte Tragstruktur gemäß Figur 1;
- Fig.3: eine Perspektivansicht auf einen Teil eines Stützkastens der Tragstruktur, wobei aus einer seitlichen Stützkastenwand eine Öffnung für ein Ausstattungsteil ausgespart ist;
- Fig.4: ein Schnitt durch die Stützkastenwand mit dem innerhalb der Öffnung angeordneten Ausstattungsteil entlang der Linie IV-IV in Fig.3;
- Fig.5: eine Perspektivansicht auf einen Teil des Stützkastens, wobei aus einer Stirnwand eine Öffnung für ein als Baugruppe mit einem Pedalwerk gestaltetes Ausstattungsteil ausgespart ist;
- Fig.6: eine Perspektivansicht auf einen Teil des Stützkastens, wobei aus der oberen Platte des Stützkastens eine Öffnung für ein als Lenkungskonsole gestaltetes Ausstattungsteil ausgespart ist;
- Fig.7: ein Schnitt durch die obere Platte mit der innerhalb der Öffnung angeordneten Lenkungskonsole entlang der Linie VII-VII in Fig.6;
- Fig.8: eine Perspektivansicht auf einen Teil des Stützkastens, wobei aus der oberen Platte eine Öffnung für ein Einbaumodul einer Scheibenwischanlage ausgespart ist; und in
- Fig.9: ein Schnitt durch eine Leichtbauplatte der Tragstruktur mit einer Öffnung, innerhalb der ein Gehäuse für elektrische Bauelemente eingesetzt ist, wobei in einem Hohlkanal der Leichtbauplatte eine elektrische Leitung zum Gehäuse geführt ist.

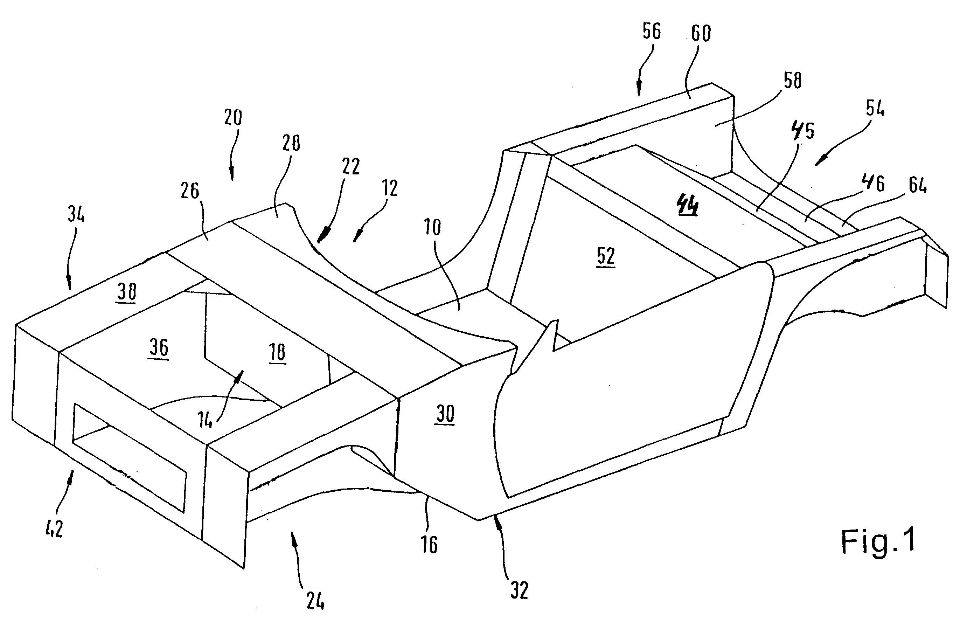

In Fig.1 ist in Perspektivansicht von schräg vorne oben eine Tragstruktur eines Kraftwagens dargestellt, die einen aus einer Leichtbauplatte bestehenden tragenden Boden 10 umfasst. Die im weiteren beschriebene Tragstruktur weist überwiegend energieabsorbierende, eigensteife und ebene Leichtbauplatten auf, die vorzugsweise je nach Anforderung in Sandwichbauweise, mit Wabenstruktur, in Holz, in Aluminium, als Faserverbund, als Strangpressprofil oder dgl. gefertigt sind. Um günstige Fertigungsbedingungen zu erreichen, können die einzelnen Plattenabschnitte sowohl einteilig ausgebildet und abgewinkelt als auch mehrteilig miteinander gefügt sein. Vorn im Fußraumbereich 12 geht der Boden 10 in eine Stirnwand 14 über, die einen an den Boden 10 anschließenden, schräg nach vorn oben gerichteten Übergangsbereich 16 und einen davon oberhalb angeordneten, etwa vertikalen Bereich 18 umfasst. Seitlich und oben ist der Fußraumbereich 12 von einer Plattenanordnung 20 begrenzt, die gemeinsam mit dem Boden 10 und der Stirnwand 14 einen Stützkasten 22 für eine an diesem befestigte Vorbaustruktur 24 bilden. Dabei umfasst die Plattenanordnung 20 eine vordere und eine hintere obere Leichtbauplatte 26,28 sowie seitliche Stützkastenwände 30, die den Fußraumbereich 12 seitlich begrenzen und jeweils einen Wandbereich einer Seitenwand 32 der Tragstruktur bilden.

Die Vorbaustruktur 24 umfasst zwei vordere Längsträger 34, die jeweils einen vertikalen und einen quer dazu verlaufenden Plattenschenkel 36,38 aufweisen. Am vorderen Ende der Längsträger 34 ist eine in Fahrzeugquerrichtung und vertikal verlaufende Frontwand 42 befestigt. Die Seitenwände 32 sind bis zu der Frontwand 42 nach vorne verlängert und mit Radausschnitten versehen.

Hinten geht der Boden 10 in eine schräg nach hinten oben ragende Hecktrennwand 52 über, die sich zwischen den Seitenwänden 32 erstreckt. Die Tragstruktur weist hinter der Hecktrennwand 52 eine Heckstruktur 54 mit hinteren Längsträgern 56 auf, die jeweils einen in Fahrzeughochrichtung und einen in Fahrzeuglängsrichtung abgewinkelten Plattenschenkel 58,60 aufweisen. Am hinteren Ende der hinteren Längsträger 56 ist eine in Fahrzeugquerrichtung verlaufende vertikale Heckwand 64 befestigt. Die hinteren Längsträger 56 sind über eine Plattenanordnung aus Leichtbauplatten 44,45,46 fest miteinander zu einem Kasten verbunden.

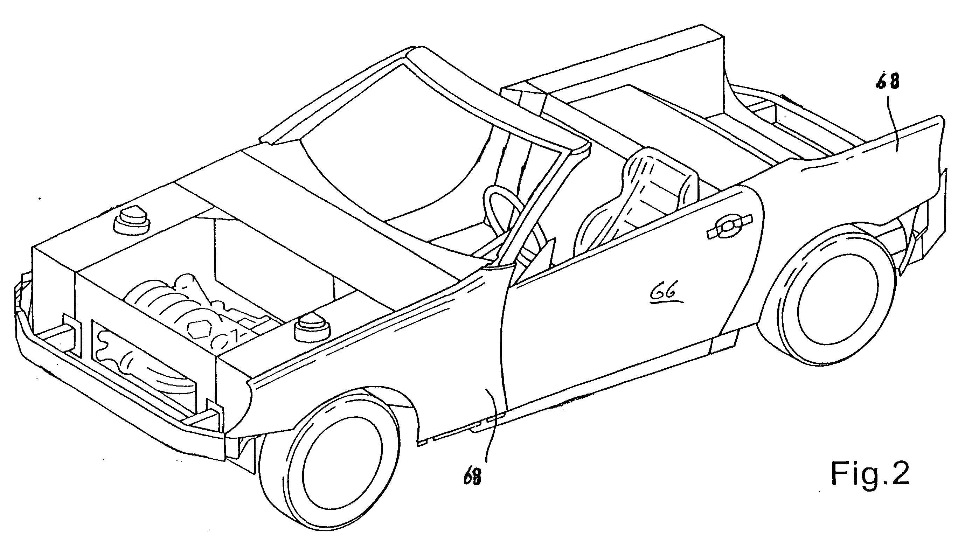

Die in Fig.2 in Perspektivansicht gezeigte Tragstruktur gemäß Fig.1 ist mit einer Beplankung versehen, von der hier an entsprechenden Aufnahmen der Tragstruktur festgelegte Verkleidungsteile 68 des linken vorderen und hinteren Kotflügels sowie ein Verkleidungsteil 66 der Seitenwand gezeigt sind.

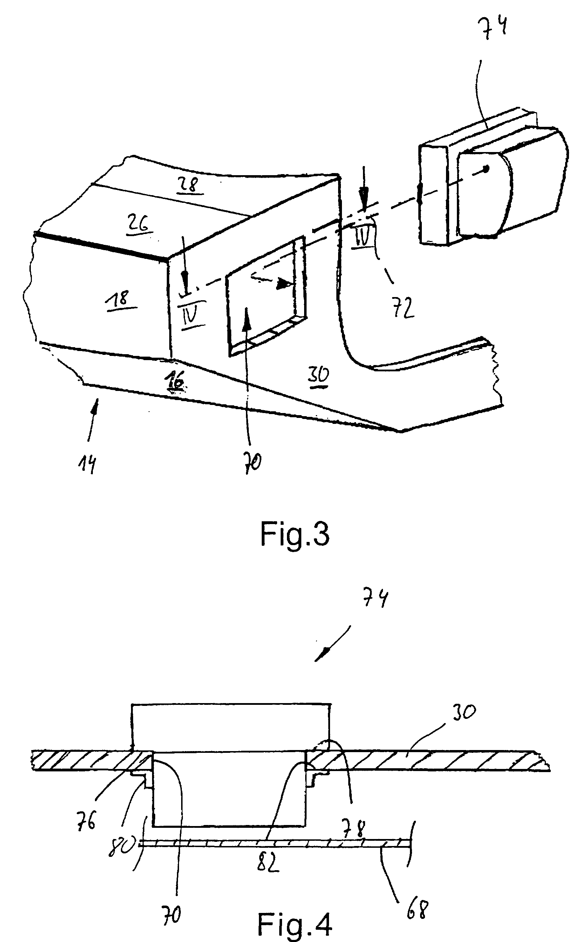

Fig.3 zeigt in Perspektivansicht ein Teil der Tragstruktur im Bereich des Stützkastens 22, wobei ausschnittweise die linke seitliche Stützkastenwand 30, der Übergangsbereich 16 und der vertikale Bereich 18 der Stirnwand 14, sowie die oberen Platten 26 und 28 erkennbar sind. Aus der Stützkastenwand 30 ist hier eine Öffnung 70 ausgespart, in die - wie mit dem gestrichelten Pfeil 72 angedeutet - ein Ausstattungsteil 74 unter Überdeckung der Öffnung 70 einsetzbar ist. Das Ausstattungsteil 70 ist hier als Gehäuse für elektrische Bauelemente, beispielsweise als Sicherungskasten oder dgl. ausgebildet.

In Zusammenschau mit Fig.4, in der ein Schnitt durch die Stützkastenwand 30 mit der Öffnung 70 entlang der Linie IV-IV in Fig.3 gezeigt ist, ist die Anordnung des Ausstattungsteils 74 innerhalb der Öffnung 70 erkennbar. Das Ausstattungsteil 74 weist hier eine Stützmittelanordnung mit einem umlaufenden Anlageflansch 76 auf, der zur Einsetzbegrenzung des Ausstattungsteils 74 mit einem Öffnungsrand 78 der Leichtbauplatte 30 zusammenwirkt. Der hier rechteckige lichte Querschnitt der Öffnung 70 ist dabei auf den zugeordneten Durchtrittsquerschnitt des Ausstattungsteils 74 abgestimmt. Das Ausstattungsteil 74 ist mittels eines im Querschnitt L-förmigen Ringflansches 80 in seiner Auflagestellung an der Leichtbauplatte 30 niedergehalten. Hierzu ist der Ringflansch 80 auf den durch die Öffnung 70 in Richtung nach außen ragenden Endbereich des Ausstattungsteils 74 von außen her aufgeschoben. Zur Festlegung des Ausstattungsteils 72 stützt sich der Ringflansch 80 außenseitig am Öffnungsrand 82 auf der dem Anlageflansch 76 abgewandten Breitseite der Leichtbauplatte 30 ab. Zusätzlich oder alternativ zu dem Ringflansch 80 kann das Ausstattungsteil 74 mittels einer Klebeverbindung - beispielsweise zwischen dem Anlageflansch 76 und dem zugeordneten Öffnungsrand 78 - an der Stützkastenwand 30 befestigt werden. Alternativ ist auch eine Verschraubung oder Verclipsung des Ausstattungsteils 72 an der Leichtbauplatte 30 oder mit dem Ringflansch 80 möglich. Bevorzugt ist der Anlageflansch 76 derart gestaltet, dass durch diesen die Leichtbauplatte 30 im Bereich der Öffnung 70 versteift ist. Die mit dem Ausstattungsteil 74 versehene Stützkastenwand 30 ist durch das in Fig. 2 dargestellte und in Fig.4 lediglich ausschnittweise angedeutete Verkleidungsteil 68 des linken vorderen Kotflügels überdeckt, wobei das Ausstattungsteil 74 in den Zwischenraum 83 zwischen Leichtbauplatte 30 und Beplankungsteil 68 hineinragt.

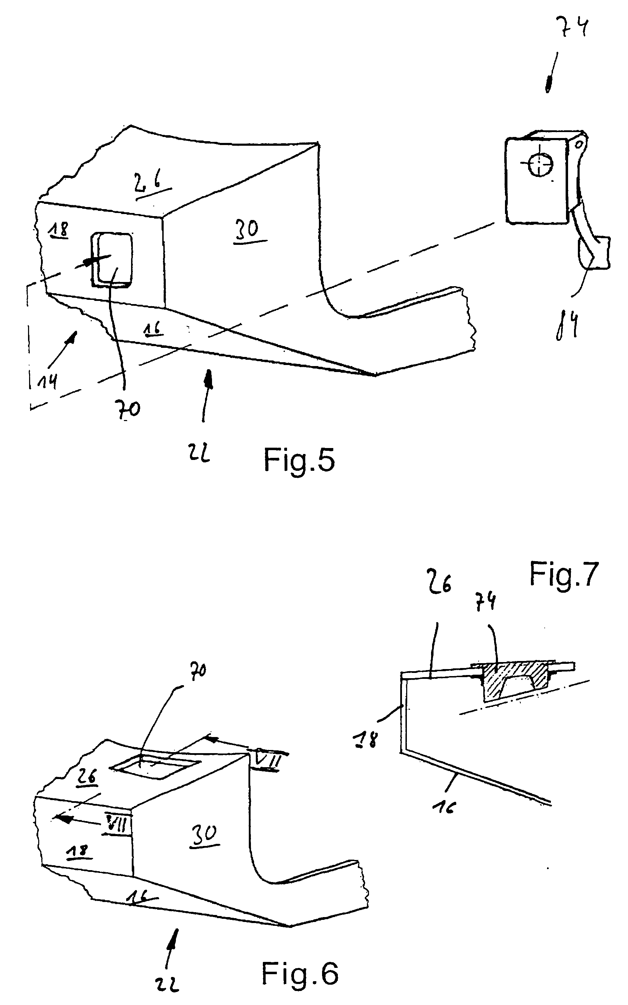

Fig.5 zeigt in Perspektivansicht wiederum ein Teil des Stützkastens 22 mit der seitlichen Stützkastenwand 30, der Stirnwand 14, sowie der oberen Platte 26. Das Ausstattungsteil 74 ist hier als Baugruppe mit einem Pedalwerk 84 gestaltet, welches - wie mit dem gestrichelten Pfeil angedeutet - in eine aus der Stirnwand 14 bzw. aus deren vertikalem Abschnitt 18 ausgesparten Öffnung 70 auf bereits beschriebene Weise von vorne her einsetzbar und in der eingesetzten Position sicherbar ist.

In den Figuren 6 und 7 ist eine Perspektivansicht ein Teil des Stützkastens 22 mit der Öffnung 70 in der oberen Platte 26 bzw. in Schnittansicht entlang der Linie VII - VII in Fig.6 das in die Öffnung 70 eingesetzte Ausstattungsteil 74 dargestellt. Dabei ist das Ausstattungsteil 74 als Lenkungskonsole ausgebildet und von oben her in die Öffnung 70 eingesetzt.

Fig.7 zeigt - wie mit dem gestrichelten Pfeil angedeutet - wahlweise ein in die Öffnung 70 in der oberen Platte 26 einsetzbares Einbaumodul 74 einer Scheibenwischanlage 86 oder ein in die Öffnung 70 einsetzbares Ausstattungsteil, welches als Ablageschale 88 ausgebildet ist. Ist die Anordnung der Scheibenwischanlage 86 vorgesehen, so muss die hier nicht gezeigte Windschutzscheibe entsprechend hinter der Öffnung 70 am hinteren Ende der Platte 26 enden. Ist die Anordnung der Ablageschale 88 im Innenraum vorgesehen, so muss die Windschutzscheibe entsprechend vor der Öffnung 70 am vorderen Ende der Platte 26 enden.

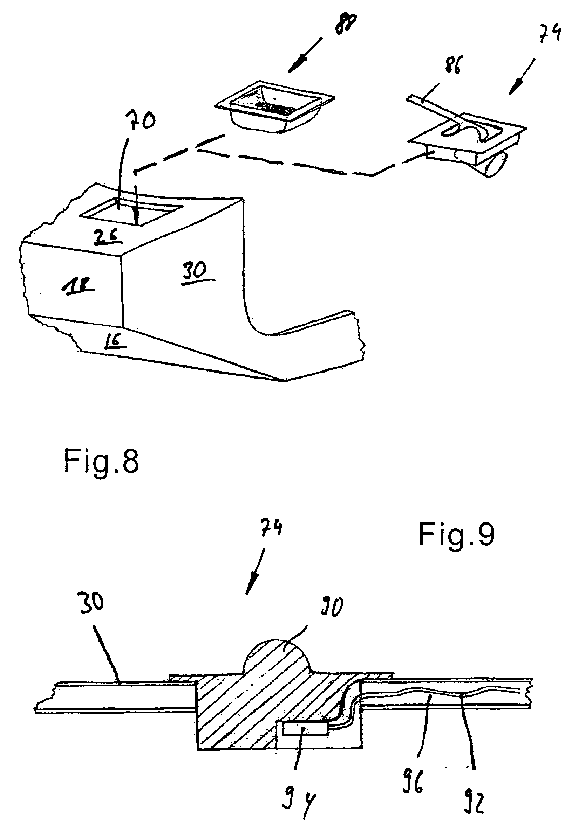

In Fig.9 ist ein Schnitt durch eine Leichtbauplatte, beispielsweise der Stützkastenwand 30 mit der Öffnung 70 gezeigt, innerhalb der als Ausstattungsteil 74 ein Gehäuse 90 für elektrische Bauelemente eingesetzt ist. Die Bauelemente sind dabei z.B. über ein Steckverbindungsmittel 94 mit einer elektrischen Leitung 92 verbunden, welche innerhalb eines Hohlkanals 96 der dem Ausstattungsteil 74 zugeordneten Leichtbauplatte 30 verlegt ist. Die Leichtbauplatte 30 ist hierzu vorzugsweise aus einem Strangpressprofil mit einer Vielzahl von Hohlkammern 96 hergestellt.

## Patentansprüche

1. Tragstruktur für einen Kraftwagen, die überwiegend aus mehrwandigen Leichtbauplatten mit planparallelen Breitseiten zusammengesetzt ist, wobei aus einer den Fahrgastraum des Kraftwagens begrenzenden Leichtbauplatte (18,26,30) eine Öffnung (70) zur Befestigung eines Ausstattungsteils (74) ausgespart ist,
**dadurch gekennzeichnet,**
**dass** das Ausstattungsteil (74) unter Überdeckung der Öffnung (70) in die Leichtbauplatte (18,26,30) eingesetzt ist, wobei eine Stützmittelanordnung (76) am Ausstattungsteil (74) zur Einsetzbegrenzung mit einem Öffnungsrand (78) der Leichtbauplatte (18,26,30) zusammenwirkt, und
**dass** das Ausstattungsteil (74) in die Leichtbauplatte (18,26,30) eines Stützkastens (22) eingesetzt ist, wobei der Stützkasten (22) aus einem Bodenbereich (10), einer Stirnwand (14) und einer den vorderen Fußraumbereich (12) des Fahrgastraumes seitlich und oben begrenzenden Plattenanordnung (20) besteht.

2. Tragstruktur nach Anspruch 1,
**dadurch gekennzeichnet,**
**dass** die mit dem Ausstattungsteil (74) versehene Leichtbauplatte (18,26,30) durch ein Außenbeplankungsteil (68) des Kraftwagens verkleidet ist, wobei das Ausstattungsteil (74) in den Zwischenraum (83) zwischen Leichtbauplatte (18,26,30) und Beplankungsteil (68) hineinragt.

3. Tragstruktur nach Anspruch 1,
**dadurch gekennzeichnet,**
**dass** die Stützmittelanordnung des Ausstattungsteils (74) einen umlaufenden Anlageflansch (76) umfasst, durch den die Leichtbauplatte (18,26,30) im Bereich der Öffnung (70) versteift ist.

4. Tragstruktur nach Anspruch 1,
**dadurch gekennzeichnet,**
**dass** der lichte Querschnitt der Öffnung (70) auf den zugeordneten Durchtrittsquerschnitt des Ausstattungsteils (74) abgestimmt ist.

5. Tragstruktur nach Anspruch 1,
**dadurch gekennzeichnet,**
**dass** das Ausstattungsteil (74) über die Stützmittelanordnung (76) an der Leichtbauplatte (18,26,30) befestigt ist.

6. Tragstruktur nach Anspruch 5,
**dadurch gekennzeichnet,**
**dass** die Stützmittelanordnung (76) über eine Klebeverbindung an der Leichtbauplatte (18,26,30) befestigt ist.

7. Tragstruktur nach Anspruch 1,
**dadurch gekennzeichnet,**
**dass** das Ausstattungsteil (74) mittels eines Ringflansches (80) in seiner Auflagestellung an der Leichtbauplatte (18,26,30) niedergehalten ist, wobei der Ringflansch (80) auf den durch die Öffnung (70) ragenden Endbereich des Ausstattungsteils (74) aufgeschoben ist und sich am Öffnungsrand (82) auf der der Stützmittelanordnung (76) abgewandten Breitseite der Leichtbauplatte (18,26,30) abstützt.

8. Tragstruktur nach Anspruch 1,
**dadurch gekennzeichnet,**
**dass** das Ausstattungsteil (74) eine Baugruppe mit einem Pedalwerk (84) ist.

9. Tragstruktur nach Anspruch 1,
**dadurch gekennzeichnet,**
**dass** das Ausstattungsteil (74) eine Lenkungskonsole ist.

10. Tragstruktur nach Anspruch 1,
**dadurch gekennzeichnet,**
**dass** das Ausstattungsteil (74) ein Gehäuse (90) für elektrische Bauelemente ist.

11. Tragstruktur nach Anspruch 10,
**dadurch gekennzeichnet,**
**dass** die Bauelemente mit elektrischen Leitungen (92) verbindbar sind, welche in Hohlkanälen (96) der dem Ausstattungsteil (90) zugeordneten Leichtbauplatte (18,26,30) verlegt sind.

12. Tragstruktur nach Anspruch 1,
**dadurch gekennzeichnet,**
**dass** das Ausstattungsteil (74) ein Einbaumodul für eine Scheibenwischanlage (86) ist.

## Claims

1. Support structure for a motor vehicle, predominantly made up of multi-walled lightweight construction panels with plane-parallel faces, in which an orifice (70) is cut out from a lightweight construction panel (18, 26, 30) bounding the passenger compartment of the motor vehicle in order to fit a piece of equipment (74),
**characterised in that**
the piece of equipment (74) is inserted so that it blanks the orifice (70) in the lightweight construction panel (18, 26, 30), a supporting means (76) being provided on the piece of equipment (74) which co-operates with an orifice edge (78) of the lightweight construction panel (18, 26, 30) in order to limit the degree to which it is inserted and
**in that** the piece of equipment (74) is inserted in the lightweight construction panel (18, 26, 30) of a support box (22), the support box (22) consisting of a floor region (10), a front wall (14) and a panel arrangement (20) bounding the sides and top of the front foot well region (12) of the passenger compartment.

2. Support structure as claimed in claim 1,
**characterised in that**
the lightweight construction panel (18, 26, 30) in which the piece of equipment (74) is fitted is faced with an exterior panelling part (68) of the motor vehicle and the piece of equipment (74) projects into the intermediate space (83) between the lightweight construction panel (18, 26, 30) and the exterior panelling part (68).

3. Support structure as claimed in claim 1,
**characterised in that**
the supporting means of the piece of equipment (74) comprises a peripheral mounting flange (76) by means of which additional rigidity is imparted to the lightweight construction panel (18, 26, 30) in the region of the orifice (70).

4. Support structure as claimed in claim 1,
**characterised in that**
the internal cross section of the orifice (70) matches the part of the cross section by which the piece of equipment (74) is inserted.

5. Support structure as claimed in claim 1,
**characterised in that**
the piece of equipment (74) is secured to the lightweight construction panel (18, 26, 30) by the supporting means (76).

6. Support structure as claimed in claim 5,
**characterised in that**
the supporting means (76) si secured to the lightweight construction panel (18, 26, 30) by means of a bonded joint.

7. Support structure as claimed in claim 1,
**characterised in that**
the piece of equipment (74) is held down in its fitted position on the lightweight construction panel (18, 26, 30) by means of an annular flange (80), the annular flange (80) being pushed onto the end region of the piece of equipment (74) projecting through the orifice (70) and supported at the orifice edge (82) on the face of the lightweight construction panel (18, 26, 30) remote from the supporting means (76).

8. Support structure as claimed in claim 1,
**characterised in that**
the piece of equipment (74) is a unit with a pedal system (84).

9. Support structure as claimed in claim 1,
**characterised in that**
the piece of equipment (74) is a mounting for a steering wheel unit.

10. Support structure as claimed in claim 1,
**characterised in that**
the piece of equipment (74) is a housing (90) for electrical components.

11. Support structure as claimed in claim 10,
**characterised in that**
the components can be connected to electric wires (72) which are run through hollow passages (96) in the lightweight construction panel (18, 26, 30) in which the piece of equipment (90) is fitted.

12. Support structure as claimed in claim 1,
**characterised in that**
the piece of equipment (74) is an integrated module for a windscreen wiper system (86).

## Revendications

1. Structure de support de véhicule automobile composée de manière prépondérante de panneaux composites légers multi-parois avec des côtés larges plans et parallèles, une ouverture (70) pour fixer une pièce d'équipement (74) étant réservée dans un panneau composite léger (18, 26, 30) délimitant l'habitacle pour les passagers du véhicule, **caractérisée en ce que** la pièce d'équipement (74) est mise en place dans le panneau composite léger (18, 26, 30 en recouvrant l'ouverture (70)), alors que sur la pièce d'équipement (74) un ensemble de moyens d'appui (76) agit de concert avec un bord (78) de l'ouverture du panneau composite léger (18, 26, 30) pour délimiter l'insertion et **en ce que** la pièce d'équipement (74) est insérée dans le panneau composite léger (18, 26, 30) d'un caisson d'appui (22), le caisson d'appui (22) se composant d'une zone de fond (10), d'une paroi frontale (14) et d'un ensemble de panneaux (20) délimitant latéralement et en haut la zone avant du compartiment des pieds (12) de l'habitacle des passagers.

2. Structure de support selon la revendication 1, **caractérisée en ce que** le panneau composite léger (18, 26, 30) muni de la pièce d'équipement (74) est revêtu par un élément de bordage extérieur (68) du véhicule automobile, la pièce d'équipement (74) pénétrant dans l'interstice (83) entre le panneau composite léger (18, 26, 30) et l'élément de bordage extérieur (68).

3. Structure de support selon la revendication 1, **caractérisée en ce que** l'ensemble de moyens d'appui de la pièce d'équipement (74) comprend une collerette d'appui circulaire (76) à l'aide de laquelle le panneau composite léger (18, 26, 30) est rigidifié dans la zone de l'ouverture (70).

4. Structure de support selon la revendication 1, **caractérisée en ce que** la section libre de l'ouverture (70) est accordée avec la section de passage associée de la pièce d'équipement (74).

5. Structure de support selon la revendication 1, **caractérisée en ce que** la pièce d'équipement (74) est fixée sur le panneau composite léger (18, 26, 30) par l'intermédiaire de l'ensemble de moyens d'appui (76).

6. Structure de support selon la revendication 5, **caractérisée en ce que** l'ensemble de moyens d'appui (76) est fixé sur le panneau composite léger (18, 26, 30) à l'aide d'une liaison collée.

7. Structure de support selon la revendication 1, **caractérisée en ce que** la pièce d'équipement (74) est maintenue dans sa position d'appui sur le panneau composite léger (18, 26, 30) au moyen d'une collerette circulaire (80), la collerette circulaire (80) étant enfilée sur la zone d'extrémité de la pièce d'équipement (74) passant par l'ouverture (70) et s'appuyant au bord (82) de l'ouverture sur le côté large du panneau composite léger (18, 26, 30) opposé à l'ensemble de moyens d'appui (76).

8. Structure de support selon la revendication 1, **caractérisée en ce que** la pièce d'équipement (74) est un ensemble avec un pédalier (84).

9. Structure de support selon la revendication 1, **caractérisée en ce que** la pièce d'équipement (74) est une console de direction.

10. Structure de support selon la revendication 1, **caractérisée en ce que** la pièce d'équipement (74) est un boîtier (90) pour des composants électriques.

11. Structure de support selon la revendication 10, **caractérisée en ce que** les composants peuvent être reliés par des liaisons électriques (92) qui sont posées dans des canaux creux (96) du panneau composite léger (18, 26, 30) associé à la pièce d'équipement (90).

12. Structure de support selon la revendication 1, **caractérisée en ce que** la pièce d'équipement (74) est un module d'implantation pour une installation d'essuie-glace (86).
